# EUROPÄISCHE PATENTSCHRIFT

(11) **EP 3 492 827 B1**
(45) Veröffentlichungstag und Bekanntmachung des Hinweises auf die Patenterteilung: **28.10.2020**
(21) Anmeldenummer: 18206197.8
(22) Anmeldetag: 14.11.2018
(51) Int. Cl.: F24F 11/00, G01C 21/34, G05B 15/02

(54) **VERFAHREN UND VORRICHTUNG ZUM EINSTELLEN EINES ZEITPROGRAMMS EINES HEIZSYSTEMS UND/ODER EINES ZEITPROGRAMMS EINES SYSTEMS ZUR HAUSAUTOMATION**
METHOD AND APPARATUS FOR ADJUSTING THE TIMING OF A HEATING SYSTEM AND/OR A HOME AUTOMATION TIMING SYSTEM
PROCÉDÉ ET DISPOSITIF DE RÉGLAGE D'UN PROGRAMME DE TEMPORISATION D'UN SYSTÈME DE CHAUFFAGE ET / OU D'UN PROGRAMME DE TEMPORISATION D'UN SYSTÈME D'AUTOMATISATION DOMESTIQUE

(30) Priorität: 29.11.2017 DE 102017221377
(43) Veröffentlichungstag der Anmeldung: 05.06.2019
(73) Patentinhaber: Robert Bosch GmbH, 70442 Stuttgart (DE)
(72) Erfinder: Dragt, Jorick, 7513 ZA Enschede (NL); Reiss, Attila, 71277 Rutesheim (DE)

(56) Entgegenhaltungen:
- US-A1- 2011 231 091
- US-A1- 2017 285 596
- US-B1- 8 825 383

## Beschreibung

Die Erfindung betrifft ein Verfahren zum Einstellen eines Zeitprogramms eines Heizsystems und/oder eines Zeitprogramms eines Systems zur Hausautomation. Die Erfindung betrifft auch ein Computerprogramm, das zum Ausführen einer Ausführungsform des Verfahrens gemäß der vorliegenden Erfindung eingerichtet ist, ein maschinenlesbares Speichermedium mit einem Computerprogramm gemäß der vorliegenden Erfindung sowie ein mobiles Rechengerät mit einem Computerprogramm gemäß der vorliegenden Erfindung.

### Stand der Technik

Moderne Heizsysteme bzw. Systeme zur Gebäudeautomatisierung erlauben es, eine Heizung einer Wohnung in Abhängigkeit von der Anwesenheit des Bewohners zu betreiben. Um Energie zu sparen, wird eine Wohnung bevorzugt nur dann beheizt, wenn der Bewohner anwesend ist. Typischerweise wird die Anwesenheit des Bewohners erkannt, wenn sich sein Smartphone in das WLAN-Netzwerk der Wohnung eingewählt hat oder ein GPS-Empfänger des Smartphones eine Position erfasst, die hinreichend nah an der Wohnung ist. Solche anwesenheitsbasierten Steuerungen haben den Nachteil, dass der Bewohner in einer kalte Wohnung ankommen kann, die erst nach seiner Ankunft beheizt wird.

US 2017/285596 A1 zeigt ein Verfahren zur Steuerung von Haushaltsgeräten, welches auf Grundlage von erwarteten Reisen von einem oder mehreren Nutzern die Haushaltsgeräte ansteuert.

### Offenbarung der Erfindung

### Vorteile

Die Erfindung ist im beigefügten Anspruchssatz beschrieben.

Das hat den Vorteil, dass durch die Vorhersage der erwarteten Ankunftszeit und des erwarteten Zielorts das Heizsystem rechtzeitig vor einer Ankunft in Betrieb genommen werden kann. Gemäß der vorliegenden Erfindung wird ein Zeitprogramm des Heizsystems bzw. eines Systems zur Hausautomation eingestellt. Beispielsweise kann das Zeitprogramm so eingestellt sein, dass das Heizsystem an Werktagen ab einer bestimmten Uhrzeit eine Raumtemperatur erhöht, weil zu dieser Uhrzeit üblicherweise die Bewohner von der Arbeit zurückkommen. Wird nun durch das Verfahren eine vor oder nach dieser Uhrzeit liegenden Ankunftszeit vorhergesagt, kann das Zeitprogramm entsprechend angepasst werden, insbesondere kann die Uhrzeit, ab der das Heizsystem eine höhere Raumtemperatur bereitstellt, auf die ermittelte Ankunftszeit geändert werden.

Unter "Heizsystem" ist insbesondere ein System aus mindestens einem Gerät zur Erzeugung von Wärmeenergie und/oder zum Empfangen von Wärmeenergie zu verstehen, insbesondere ein Heizgerät bzw. Heizbrenner, beispielsweise ein Brennwertkessel, insbesondere zur Verwendung in einer Gebäudeheizung und/oder zur Warmwassererzeugung, bevorzugt durch das Verbrennen von einem gasförmigen oder flüssigen Brennstoff oder durch elektrisches Heizen. Ein Heizsystem kann auch aus mehreren solchen Geräten zur Erzeugung von Wärmeenergie sowie weiteren, den Heizbetrieb unterstützenden Vorrichtungen, wie etwa einem Wasser- oder Brennstoffspeicher oder einer Wasser- oder Brennstoffpumpe oder einem Ausdehnungsgefäß, bestehen.

Unter "System zur Hausautomation" oder "Smart Home System" ist insbesondere ein System zur automatischen oder wenigstens teilautomatischen Durchführung und/oder Steuerung und/oder Regelung von Funktionsabläufen in einem Gebäude zu verstehen, insbesondere von Wohnhäusern, insbesondere nach vorgegebenen Einstellparametern. Insbesondere umfasst ein System zur Hausautomation die Steuerung und/oder Regelung von Funktionsabläufen der Gebäudesicherheit bzw. Gebäudeüberwachung und/oder des Energiemanagements und/oder der Gebäudeheizung und/oder der Warmwasserversorgung und/oder der Beleuchtung und/oder von Haushaltsgeräten und/oder von Unterhaltungselektronik. Ein System zur Hausautomation kann beispielsweise ein Heizsystem und/oder ein Beleuchtungssystem umfassen. Insbesondere sind die Vorrichtungen eines Systems zur Hausautomation, beispielsweise Sensoren, Aktoren, Bedienelemente, Verbraucher und sonstige technische Einheiten, miteinander vernetzt. Ein System zur Hausautomation ist oft zur Kommunikation bzw. zum Datenaustausch mit einem entfernten, bevorzugt mobilen Rechengerät eingerichtet, beispielsweise über das Internet, insbesondere durch eine Cloud. Auf diese Weise können Funktionsabläufe im Gebäude ferngesteuert werden, beispielsweise eine gewünschte Raumtemperatur eingestellt werden. Es kann auch möglich sein, Informationen aus dem Gebäude zu empfangen, beispielsweise eine Aufnahme einer Überwachungskamera oder eine gemessene Raumtemperatur. Mit "Smart Home System" ist manchmal ein System zur Hausautomation gemeint, bei dem eine intelligente Steuerung im Vordergrund steht, beispielsweise durch selbstlernende Algorithmen.

Unter "Zeitprogramm" soll insbesondere ein einstellbarer Ablaufplan von Funktion und/oder Parametern eines Heizsystems und/oder eines Systems zur Hausautomation verstanden werden. Das Heizsystem bzw. das System zur Hausautomation werden in Abhängigkeit vom Zeitprogramm betrieben, so dass die im Zeitprogramm festgelegten Funktionen und/oder Parameter zu den festgelegten Zeiten möglichst durchgeführt bzw. angenommen werden. Beispielsweise kann in einem Zeitprogramm gespeichert sein, welche Raumtemperatur bei welcher Uhrzeit gewünscht ist. Auf diese Weise kann zum Beispiel tagsüber, wenn voraussichtlich keine Bewohner im Gebäude anwesend sind, die Raumtemperatur abgesenkt werden. Auf diese Weise kann Heizenergie eingespart werden.

Unter "Rechengerät" ist insbesondere eine Vorrichtung zu verstehen, die dazu eingerichtet ist, zumindest Teile des Verfahrens gemäß der vorliegenden Erfindung durchzuführen. Insbesondere kann das Rechengerät einen Datenspeicher, eine Recheneinheit und Mittel zum Empfangen und/oder Erfassen von Standortdaten bzw. von einer Standortkoordinate sowie Mittel zum Senden von Daten an das Heizsystem bzw. an ein System zur Hausautomation umfassen. Bevorzugt ist das Rechengerät dazu eingerichtet, in Abhängigkeit von der bisher zurückgelegten Teilroute wenigstens die Ankunftszeit und den Zielort vorherzusagen, bevorzugt eine erwartete Route zu ermitteln, wobei die erwartete Route eine Vorhersage eines weiteren Verlaufs einer bisher zurückgelegten Teilroute darstellt. Beispiele für Rechengeräte sind PCs, Smartphones, Server oder Raumbedieneinheiten für Heizsysteme und/oder Systeme zur Hausautomation.

Ein "mobiles Rechengerät" ist ein Rechengerät, welches insbesondere dazu vorgesehen ist, von einem Benutzer tragbar zu sein und an verschiedenen Orten, bevorzugt beliebigen Orten, einsetzbar zu sein. Beispiele für mobile Recheneinheiten sind Smartphones, Tablets, Smart Watches oder Notebooks.

Unter "Vorhersage der erwarteten Ankunftszeit und des erwarteten Zielorts" ist insbesondere das Ermitteln einer in Abhängigkeit von vorliegenden Information wahrscheinlichsten Ankunftszeit und eines in Abhängigkeit von vorliegenden Informationen wahrscheinlichsten Zielorts zu verstehen.

Ein "Zwischenziel" kann insbesondere durch eine Ortsangabe beschrieben werden. Ein Zwischenziel ist insbesondere dadurch gekennzeichnet, dass ein Aufenthalt mit einer vorgegebenen Mindestverweildauer am Zwischenziel vorgesehen ist. Ein Zwischenziel ist insbesondere ein Ziel, welches bei einer Reise zu einem finalen Zielort vor dem Erreichen des finalen Zielorts angesteuert wird.

Unter einem "nächsten Zwischenziel" ist insbesondere ein Zwischenziel zu verstehen, welches als nächstes erreicht wird bzw. voraussichtlich erreicht wird. Ein nächstes Zwischenziel kann insbesondere ein vorhergesagtes bzw. erwartetes nächstes Zwischenziel sein. Es ist auch denkbar, dass eine Information über das nächste Zwischenziel empfangen wird oder aus einem Speicher ausgelesen wird. Beispielsweise kann das nächste Zwischenziel aus einem Terminkalender ermittelt werden. Insbesondere kann das nächste Zwischenziel vorgebbar sein, insbesondere durch eine Benutzereingabe.

Durch die in den Unteransprüchen aufgeführten Merkmale sind vorteilhafte Weiterbildungen des erfindungsgemäßen Verfahrens möglich.

Vorteilhaft wird eine erwartete Reise ermittelt, wobei die erwartete Reise eine Vorhersage der erwarteten Ankunftszeit und des erwarten Zielorts sowie das nächste Zwischenziel umfasst. Das ermöglicht eine besonders zuverlässige Vorhersage der erwarteten Ankunftszeit und des erwarteten Zielorts.

Unter "Reise" soll insbesondere eine Beschreibung eines Wegs von einem aktuellen Standort zu einem Zielort verstanden werden. Vorteilhaft umfasst die Reise ein oder mehrere Zwischenziele. Vorteilhaft umfasst die Reise auch eine Zeitinformationen, beispielsweise Zeitpunkte, an welchen die Zwischenziele bzw. der Zielort jeweils erreicht werden und/oder Zeitabstände, welche beispielsweise jeweils eine Zeitdauer zum Erreichen eines Zwischenziels ausgehend von einem vorhergehenden Zwischenziel beschreiben und/oder Zeitdauern, welche am einem Zwischenziel verbracht werden. Eine Reise kann auch eine Beschreibung des Weges zum Erreichen des Zielorts und/oder der Zwischenziele aufweisen, insbesondere in Verbindung mit einer Zeitinformation. Beispielsweise kann sich die Reise aus Ortskoordinaten zusammensetzen, wobei zu jeder Ortskoordinate ein Zeitpunkt gespeichert ist.

Wird das nächste Zwischenziel aus einer bisher zurückgelegten Teilroute ermittelt, ermöglicht das eine besonders zuverlässige Vorhersage der erwarteten Ankunftszeit und des erwarteten Zielorts.

Unter "Teilroute" ist insbesondere eine Beschreibung eines Weges von einem Startort zu einem aktuellen Standort zu verstehen. Eine Teilroute ist insbesondere eine noch nicht vollständig zurückgelegte Route. Eine "Route" beschreibt den Weg von einem Startort zu einem Zielort bzw. zu einem Zwischenziel. Eine Route setzt sich wenigstens aus Ortsinformationen zusammen, welche den Weg wenigstens näherungsweise beschreiben. Eine Route kann sich beispielsweise aus diskreten Ortskoordinaten, beispielsweise GPS-Koordinaten, zusammensetzen, welche entlang des Weges liegen.

Das vorliegende Verfahren hat dadurch, dass ein Zielort und das nächste Zwischenziel vorhergesagt werden, gegenüber einem Verfahren, welches nur das nächste Ziel vorhersagt, den Vorteil, dass durch die Vorhersage eine längere Zeitspanne abgedeckt wird. Auf diese Weise kann das Zeitprogramm des Heizsystems oder des Systems zur Hausautomation frühzeitig angepasst werden, falls notwendig. Das ist insbesondere dann von Vorteil, wenn eine Zeitdauer zum Zurücklegen eines Weges vom nächsten Zwischenziel zum Zielort kurz ist im Vergleich zu beispielsweise Aufheizzeiten des Heizsystems. Durch das vorliegende Verfahren kommt eine Verweilzeit am nächsten Zwischenziel dazu, die eine rechtzeitige Anpassung des Zeitprogramms ermöglicht.

Vorteilhaft umfasst das Verfahren die Schritte:
- Ermitteln der erwarteten Reise in Abhängigkeit von dem nächsten Zwischenziel und von historischen Reisedaten, wobei die historischen Reisedaten durch früher abgespeicherte historische Reisen gebildet werden.
- Einstellen des Zeitprogramms in Abhängigkeit von der erwarteten Reise, insbesondere in Abhängigkeit von der erwarteten Ankunftszeit und dem erwarteten Zielort.

Die Verwendung von historischen Reisedaten macht die Vorhersage der erwarteten Ankunftszeit und des erwarteten Zielorts besonders zuverlässig.

Das Verfahren wird weiter verbessert, wenn die erwartete Reise in Abhängigkeit von wenigstens einer Zwischenzieleigenschaft des nächsten Zwischenziels ermittelt wird, wobei die Zwischenzieleigenschaft beispielsweise eine Zeit, insbesondere eine aktuelle Zeit oder eine erwartete Ankunftszeit am nächsten Zwischenziel, und/oder eine Wetterinformation sein kann. Die Zuverlässigkeit des Verfahrens wird weiter erhöht, da die Zwischenzieleigenschaft eine genauere Ermittlung der erwarteten Reise ermöglicht. Vorteilhaft ist die Verwendung mehrerer Zwischenzieleigenschaften, beispielsweise eine aktuelle Zeit und eine Routenrichtung.

Unter "Zwischenzieleigenschaft" ist insbesondere eine Information zu verstehen, welche von dem nächsten Zwischenziel und/oder welche von der bisher zurückgelegten Teilroute abhängt. Beispiele für eine Information, welche von der bisher zurückgelegten Teilroute abhängt sind eine erfasste momentane Geschwindigkeit oder eine beim Zurücklegen der Teilroute erfasste mittlere Geschwindigkeit oder eine momentane Bewegungsrichtung oder eine mittlere Bewegungsrichtung oder ein Zeitpunkt - insbesondere eine aktuelle Uhrzeit und/oder ein aktuell vorliegender Wochentag - oder eine zuletzt empfangene Wetterinformation oder Verkehrsinformation. Eine Information, welche von der bisher zurückgelegten Teilroute abhängt, kann auch eine Information, die von dem Startort bzw. von einem Startzeitpunkt abhängt, beispielsweise der Startzeitpunkt oder eine bisher benötigte Zeit zum Durchlaufen der Teilroute oder eine mittlere Bewegungsrichtung - beispielsweise ein Verbindungsvektor zwischen dem Startort und dem aktuellen Standort - oder eine mittlere Geschwindigkeit oder eine Wetter- oder Verkehrsinformation, welche am Startort bzw. in der Nähe des Startorts empfangen wurde und/oder welche zum Startzeitpunkt vorliegt. Beispiele für eine Information, die von dem nächsten Zwischenziel abhängt sind eine Ankunftszeit am nächsten Ziel - insbesondere eine geplante Ankunftszeit und/oder eine vorhergesagte bzw. erwartete Ankunftszeit - oder eine Dauer zum Erreichen des Zwischenziels - insbesondere eine verbliebene Restdauer und/oder eine Gesamtdauer vom Startort zum Zwischenziel - oder eine Endzeit - insbesondere eine Zeit, bei der das Zwischenziel verlassen wird bzw. voraussichtlich verlassen wird - oder eine Aufenthaltsdauer bzw. voraussichtliche Aufenthaltsdauer am Zwischenziel. Weitere Beispiele für eine Information, die von dem nächsten Zwischenziel abhängt sind eine Richtung zum Zwischenziel - insbesondere ein Verbindungsvektor vom aktuellen Standort zum erwarteten Zwischenziel und/oder ein Verbindungsvektor vom Startort zum erwarteten Zwischenziel - oder eine Wetterinformation für das Zwischenziel oder eine Verkehrsinformation für das Zwischenziel.

Besonders vorteilhafte Zwischenzieleigenschaften sind eine Uhrzeit und ein Wochentag. Die Uhrzeit soll insbesondere die Ankunftszeit bzw. die erwartete Ankunftszeit am Zwischenziel beschreiben. Der Wochentag soll insbesondere den aktuell vorliegenden Wochentag beschreiben. Auf diese Weise lässt sich insbesondere Die erwartete Reise besonders zuverlässig und einfach aus den historischen Reisedaten ermitteln.

Die Genauigkeit und Zuverlässigkeit des Verfahrens wird weiter verbessert, wenn die historischen Reisen zusammen mit wenigstens einer Zwischenzieleigenschaft von wenigstens einem Zwischenziel der historischen Reise in den historischen Reisedaten gespeichert sind. Bevorzugt ist jedes Zwischenziel einer historischen Reise zusammen mit wenigstens einer Zwischenzieleigenschaft in den historischen Reisedaten gespeichert. In den historischen Reisedaten kann die gleiche historische Reise - also eine Reise, die sich auch aus den gleichen Zwischenzielen zusammensetzt - mehrfach gespeichert sein, jeweils mit einer unterschiedlichen wenigstens einen Zwischenzieleigenschaft. Beispielsweise kann die wenigstens eine Zwischenzieleigenschaft ein Wochentag sein. Wird eine gleiche Reise jeden Tag zurückgelegt, beispielsweise eine Reise zur Arbeit, ist diese Reise als historische Reise mehrfach in den historischen Reisedaten gespeichert, jeweils mit einem anderen Wochentag als Zwischenzieleigenschaft. Je höher eine Anzahl von historischen Reisen in den historischen Reisedaten, umso höher ist eine Wahrscheinlichkeit, dass die ermittelte erwartete Reise dem tatsächlichen weiteren Verlauf der Reise entspricht. Die Qualität der ermittelten Reise wird gesteigert.

Es ist von Vorteil, wenn die Reise, insbesondere eine historische Reise oder die erwartete Reise, aus Routen zusammengesetzt ist, wobei eine Route einen Startort mit einem Zwischenziel verbindet oder eine Route ein Zwischenziel mit einem nachfolgenden Zwischenziel oder dem Zielort verbindet. Die Route ermöglicht eine genauere Beschreibung eines Weges zum Zwischenziel bzw. zum Zielort. Die Genauigkeit des Verfahrens wird auf diese Weise erhöht. Es ist denkbar, dass die Routen oder Teile der Routen bzw. von den Routen abgeleitete Informationen als Zwischenzieleigenschaft verwendet werden. Beispielsweise kann eine Route aus Zellen zusammengesetzt sein, wobei die Zellen Flächenelemente eines geodätischen Netzes sind.

Das Verfahren wird weiter verbessert, wenn beim Ermitteln der erwarteten Reise als erwartete Reise die historische Reise ausgewählt wird, bei der die wenigstens eine Zwischenzieleigenschaft des Zwischenziels der historischen Reise, das dem nächsten Zwischenziel entspricht, eine größtmögliche Ähnlichkeit zu der wenigstens einen Zwischenzieleigenschaft des nächsten Zwischenziels aufweist. Durch die Auswahl einer schon bekannten bzw. abgespeicherten historischen Reise als erwartete Reise wird das Verfahren besonders schnell und robust. Insbesondere bei sich häufig widerholenden Reisen ist das Verfahren besonders sicher und effizient ausführbar.

Insbesondere wird durch das Verfahren in den historischen Routendaten nur jeweils das Zwischenziel einer historischen Reise berücksichtigt, das dem nächsten Zwischenziel entspricht. Es ist nicht notwendig, die anderen Zwischenziele einer historischen Route bei der Auswahl der erwarteten Reise zu berücksichtigen. Das macht das Verfahren besonders schnell und einfach. Die erwartete Reise kann schneller bzw. mit einem geringeren Rechenaufwand ermittelt werden. Auf diese Weise ist das Verfahren auch auf Rechengeräten mit geringer Rechenleistung durchführbar, beispielsweise auf mobilen Rechengeräten. Insbesondere ist es nicht notwendig, das Verfahren oder Teile des Verfahrens auf externen Rechengeräte durchzuführen, beispielsweise auf einer Cloud oder auf einem Server.

Dass das Verfahren weitgehend vollständig auf einem bevorzugt mobilen Rechengerät des Benutzers durchführbar ist, hat den zusätzlichen Vorteil, dass zur Durchführung des Verfahrens keine persönlichen Standortdaten und/oder Bewegungsdaten versendet bzw. weitergegeben werden müssen. Auf diese Weise wird eine Privatsphäre des Benutzers geschützt.

Eine "größtmögliche Ähnlichkeit" von der wenigstens einen Zwischenzieleigenschaft des nächsten Zwischenziels zu der wenigstens einen Zwischenzieleigenschaften des Zwischenziels der historischen Reise, das dem nächsten Zwischenziel entspricht kann vorteilhaft mit einer Metrik bzw. Abstandsfunktion der wenigstens einen Zwischenzieleigenschaft definiert bzw. ermittelt werden.

Durch das vorliegende Verfahren wird aus dem nächsten Zwischenziel wenigstens der erwartete Zielort ermittelt. Es ist denkbar, dass auch weitere Zwischenziele ermittelt werden.

Eine besonders vorteilhafte Realisierung des Verfahrens ist gegeben, wenn die erwartete Reise durch einen k-Nearest-Neighbor-Algorithmus aus den historischen Reisedaten ausgewählt wird und eine Zwischenzielmetrik die wenigstens eine Zwischenzieleigenschaft des nächsten Zwischenziels mit der wenigstens einen Zwischenzieleigenschaft des Zwischenziels der historischen Reise vergleicht, das dem nächsten Zwischenziel entspricht. Auf diese Weise lässt sich als erwartete Reise die historische Reise, bei der die wenigstens eine Zwischenzieleigenschaft des Zwischenziels, das dem nächsten Zwischenziel entspricht, eine größtmögliche Ähnlichkeit zu der wenigstens einen Zwischenzieleigenschaft des nächsten Zwischenziels aufweist, besonders schnell und einfach ermitteln.

Die "Zwischenzielmetrik" ist eine Metrik, welche zwei welche zwei Informationen bzw. Werten der wenigstens einen Zwischenzieleigenschaft eine positive Zahl zuordnet, welche umso größer ist, je stärker sich die beiden Informationen bzw. Werte unterscheiden. Sind beide Informationen bzw. Werte der wenigstens einen Zwischenzieleigenschaft gleich, liefert die Zwischenzielmetrik den Wert Null. Ist beispielsweise die wenigstens eine Zwischenzieleigenschaft eine Uhrzeit, kann die Zwischenzielmetrik eine positive Zeitdifferenz zwischen den Uhrzeiten in Minuten sein.

Wird einem Zwischenziel jeweils mehr als eine Zwischenzieleigenschaft zugeordnet, kann die Zwischenzielmetrik beispielsweise eine Summe von Metriken für jeweils eine Zwischenzieleigenschaft sein. Wird beispielsweise jedem Zwischenziel ein Geschwindigkeitsvektor und eine Uhrzeit zugeordnet, kann als Zwischenzielmetrik die Summe aus einer Metrik für den Geschwindigkeitsvektor und aus einer Metrik für die Uhrzeit gewählt werden. Es ist denkbar, dass die eine Zwischenzielmetrik bildenden einzelnen Metriken unterschiedlich stark gewichtet werden. Auf diese Weise ist es möglich, bestimmte Zwischenzieleigenschaften stärker zu berücksichtigen als andere.

Beim "k-Nearest-Neighbor-Algorithmus" wird ein Testobjekt klassifiziert. Dem Testobjekt wird eine von wenigstens zwei vorgegebenen Klassen eine zugeordnet. Dem Testobjekt wird in Abhängigkeit von einer Menge von bereits klassifizierten Objekten und einer Metrik, die den Abstand der Objekte bestimmt, eine Klasse zugeordnet. Es wird eine Anzahl k der bereits klassifizierten Objekte bestimmt, die den kleinsten Abstand zum Testobjekt haben. Es wird überprüft, welche Klassen die k bestimmten Objekte haben. Dem Testobjekt wird die Klasse zugeordnet, die die Mehrheit der k klassifizierten bestimmten Objekte hat.

Im Verfahren sind die Klassen des k-Nearest-Neighbor-Algorithmus in bevorzugten Ausführungsformen die möglichen Reisen, jeweils wenigstens zusammengesetzt aus Startort, Zwischenzielen und Zielort. Es werden alle historischen Reisen der historischen Reisedaten zur Definition der Klassen verwenden. Die in den historischen Reisedaten zusammen mit den historischen Reisen gespeicherten Zwischenzieleigenschaften werden nicht zum Klassifizieren bzw. zur Definition einer Klasse verwendet. In alternativen Ausführungsformen definieren die Zielorte der historischen Reisen die Klassen. Es werden alle in den historischen Routendaten vorkommenden Zielorte als Klassen verwendet.

Es ist auch denkbar, dass nur ein Teil einer Kette von Zwischenzielen einer historischen Route als Klasse verwendet wird, insbesondere in Abhängigkeit nächsten Zwischenziel. Vorteilhaft weist der Teil der Kette von Zwischenzielen nur solche Zwischenziele auf, die nach einem Zwischenziel angeordnet sind, das dem nächsten Zwischenziel entspricht. Bei einer solchen vorteilhaften Variante werden als Klasse gekürzte historische Reisen verwendet, bei denen die vor einem Zwischenziel, das dem nächsten Zwischenziel entspricht, liegende Zwischenziele entfernt sind.

Im Verfahren ist die Metrik des k-Nearest-Neighbor-Algorithmus die Zwischenzielmetrik. Das Testobjekt des k-Nearest-Neighbor-Algorithmus ist die wenigstens eine Zwischenzieleigenschaft des nächsten Zwischenziels. Die bereits klassifizierten Objekte sind die historischen Reisen in Verbindung mit der jeweils zusammen mit ihnen gespeicherten wenigstens einen Zwischenzieleigenschaft. Zur Bewertung des Abstandes der Zwischenzieleigenschaft des nächsten Zwischenziels - also des Testobjekts - zur Zwischenzieleigenschaft des Zwischenziels der historischen Reise, das dem nächsten Zwischenziel entspricht - also einem bereits klassifizierten Objekt - wird mit der Zwischenzielmetrik ermittelt. Die Klasse der Zwischenzieleigenschaft des Zwischenziels der historischen Reise, das dem nächsten Zwischenziel entspricht - also die Klasse des bereits klassifizierten Objekts - ist die historische Reise.

Werden die historischen Reisedaten nach einer Zielerreichung in Abhängigkeit von der beendeten Reise aktualisiert, wird insbesondere die beendete Reise - bevorzugt zusammen mit der wenigstens einen Zwischenzieleigenschaft - in den historischen Reisedaten abgespeichert, hat das den Vorteil, dass die Qualität der ermittelten erwarteten Reise weiter erhöht wird. Die Wahrscheinlichkeit, dass die erwartete Reise einer tatsächlichen Reise entspricht, wird gesteigert. Durch das Aktualisieren der historischen Reisedaten können insbesondere neue Reisen, insbesondere Zielorte, gelernt werden und durch das Verfahren berücksichtigt werden.

Unter "Aktualisieren der historischen Reisedaten" soll insbesondere verstanden werden, dass beendete Reisen in den historischen Reisedaten abgespeichert werden, bevorzugt zusammen mit der wenigstens einen Zwischenzieleigenschaft, und/oder dass historische Reisen, die innerhalb einer vorgegebenen Zeitspanne, beispielsweise innerhalb von einem Jahr, nicht mehr durchlaufen wurden, aus den historischen Reisedaten entfernt werden. Es ist auch denkbar, dass historische Reisen mit einem Zielort, der innerhalb einer vorgegebenen Zeitspanne nicht mehr erreicht wurde, aus den historischen Reisedaten entfernt werden. Auf diese Weise werden nicht mehr relevante historische Reisen nicht mehr berücksichtigt. Die Qualität und Genauigkeit des Verfahrens wird weiter verbessert.

Ein weiterer Aspekt der vorliegenden Erfindung ist ein Computerprogramm, welches dazu eingerichtet ist, eine Ausführungsform des Verfahrens gemäß der vorliegenden Erfindung auszuführen. Insbesondere veranlasst das Computerprogramm ein Rechengerät, eine Ausführungsform des Verfahrens gemäß der vorliegenden Erfindung durchzuführen, wenn es auf dem Rechengerät ausgeführt wird.

Ein weiterer Aspekt der vorliegenden Erfindung ist ein maschinenlesbares Speichermedium. Auf dem maschinenlesbaren Speichermedium ist das Computerprogramm gemäß der vorliegenden Erfindung gespeichert.

Eine weitere vorteilhafte Ausführungsform der Erfindung manifestiert sich in einem mobilen Rechengerät, insbesondere Smartphone, mit einem Sender zum Senden von Daten an ein Heizsystem und/oder ein Systems zur Hausautomation - beispielsweise ein Mobilfunkmoden, wobei das mobile Rechengerät durch eine entsprechende integrierte Schaltung und/oder ein auf einem Speicher gespeichertes Computerprogramm dazu eingerichtet ist, ein Verfahren gemäß der vorstehenden Ausführungen auszuführen.

Vorteilhaft weist das mobile Rechengerät einen Sensor zur Erfassung einer Standortkoordinate - beispielsweise ein GPS-Modul - und/oder einen Empfänger zum Empfangen einer Standortkoordinate - beispielsweise ein Mobilfunkmodem - auf. Auf diese Weise ist es möglich, das nächste Zwischenziel zu ermitteln. Insbesondere kann auf diese Weise eine bisher zurückgelegte Teilroute ermittelt werden.

### Zeichnungen

In den Zeichnungen sind Ausführungsbeispiele des Verfahrens zum Einstellen eines Zeitprogramms gemäß der vorliegenden Erfindung sowie ein mobiles Rechengerät gemäß der vorliegenden Erfindung dargestellt und in der nachfolgenden Beschreibung näher erläutert. Es zeigen
Figur 1 zeigt das Verfahren zum Einstellen eines Zeitprogramms gemäß der vorliegenden Erfindung,
Figuren 2a und 2b ein Zeitprogramm eines Heizsystems jeweils vor und nach der Einstellung durch das Verfahren,
Figur 3 zeigt eine durch das Verfahren vorhergesagte erwartete Reise und
Figur 4 ein mobiles Rechengerät gemäß der vorliegenden Erfindung mit dem Heizsystem.

### Beschreibung

In den verschiedenen Ausführungsvarianten erhalten gleiche Teile bzw. Schritte die gleichen Bezugszahlen.

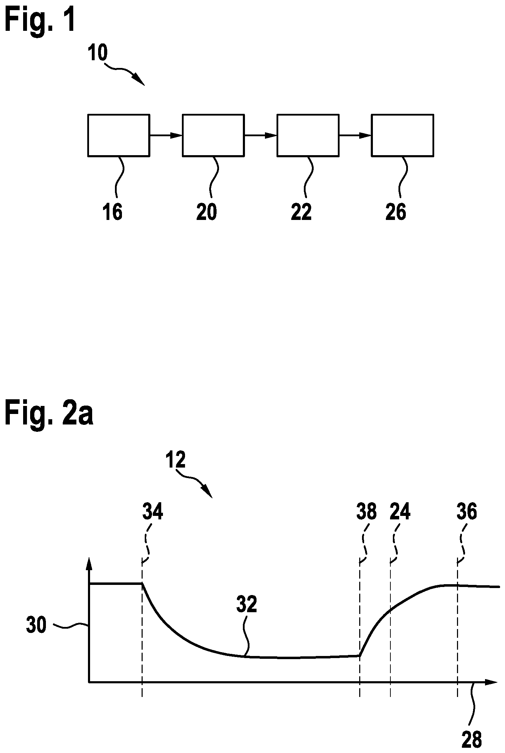

In Figur 1 ist ein Verfahren 10 zum Einstellen eines Zeitprogramms 12 eines Heizsystems 14 dargestellt. In einem ersten Schritt 16 wird ein nächstes Zwischenziel ermittelt. Im Ausführungsbeispiel wird das nächste Zwischenziel aus einer bisher zurückgelegten Teilroute ermittelt. Das nächste Zwischenziel wird durch ein Smartphone 18 ermittelt.

Im Ausführungsbeispiel wird die bisher zurückgelegte Teilroute durch ein GPS-Modul 19 des Smartphones 18 erfasst. Einer durch das GPS-Modul 19 erfassten Standortkoordinate wird eine Zelle eines geodätischen Netzes zugeordnet, in der sich die Koordinate befindet. Das geodätische Netz wird im Ausführungsbeispiel durch ein Maidenhead Locator System vierter Stufe verwendet, bei dem zur Beschreibung der Zellen achtstellig QTH-Locatoren verwendet werden. Die Zellen haben in Deutschland eine Diagonale mit einer Länge von etwa 700 Metern. In Varianten können beliebige andere geodätische Netze verwendet werden.

Die bisher zurückgelegte Teilroute setzt sich aus Zellen zusammen. Das nächste Zwischenziel wird ermittelt, indem eine erwartete Route ermittelt wird, welche das nächste Zwischenziel als Zielort aufweist. Die erwarte Route wird in Abhängigkeit von historischen Routendaten, die im Speicher des Smartphones 18 abgelegt sind, ermittelt. Die historischen Routendaten umfassen früher abgespeicherte historische Routen, welche früher zurückgelegt wurden. Es wird die historische Route als erwartete Route ausgewählt, welche die größte Ähnlichkeit zur bisher zurückgelegten Teilroute aufweist.

In alternativen Ausführungen kann das nächste Zwischenziel auf eine beliebige andere Weise ermittelt werden. Es ist auch denkbar, dass das nächste Zwischenziel vorgegeben ist oder vorgebbar ist. Im Ausführungsbeispiel wird das Zwischenziel durch eine Zwischenzielzelle beschrieben. Die Zwischenzielzelle ist die Zelle des geodätischen Netzes, in der sich das Zwischenziel befindet.

In einem weiteren Schritt 20 wird eine erwartete Reise ermittelt. Die erwartete Reise wird in Abhängigkeit von dem nächsten Zwischenziel, von zwei Zwischenzieleigenschaften und von historischen Routendaten bestimmt.

Die zwei Zwischenzieleigenschaften sind im Ausführungsbeispiel ein aktueller Wochentag und eine Uhrzeit. Die Uhrzeit beschreibt die erwartete Ankunftszeit am Zwischenziel. Die Uhrzeit wird beim Ermitteln der erwarteten Route ermittelt. Die historischen Routendaten weisen eine Zeitinformation auf, welche die Dauer der jeweiligen historischen Route beschreiben. Aus der Zeitinformation lässt sich die erwartete Ankunftszeit am Zwischenziel ermitteln.

Die historischen Reisedaten werden aus historischen Reisen gebildet. Die historischen Reisedaten sind auf dem Smartphone 18 gespeichert. Jede historische Reise setzt sich aus einem Startort, einen Zielort und aus wenigstens einem Zwischenziel zusammen. Zu jedem Zwischenziel ist die Reisedauer zum danach folgenden Zwischenziel oder zum Zielort gespeichert. Zu jedem Zwischenziel ist die Aufenthaltsdauer am Zwischenziel gespeichert. Zu jedem Zwischenziel der historischen Reise sind jeweils die Zwischenzieleigenschaften gespeichert. Im Ausführungsbeispiel sind zu jedem Zwischenziel sowie zum Zielort der historischen Reise die Uhrzeit der Ankunft und der Wochentag der Ankunft gespeichert.

Die erwartete Reise wird ermittelt, in dem als erwartete Reise eine historische Reise aus den historischen Reisedaten ausgewählt wird, welche von einem k-Nearest-Neigbor-Algorithmus ermittelt wird. Der k-Nearest-Neighbor-Algorithmus verwendet eine Zwischenzielmetrik, die die Zwischenzieleigenschaften des nächsten Zwischenziels mit den Zwischenzieleigenschaften des Zwischenziels einer historischen Reise vergleicht, das dem nächsten Zwischenziel entspricht. Bei der Auswahl durch den k-Nearest-Neigbor-Algorithmus werden nur diejenigen historischen Reisen berücksichtigt, welche ein Zwischenziel aufweisen, das dem nächsten Zwischenziel entspricht.

Im Ausführungsbeispiel wird im k-Nearest-Neighbor-Algorithmus ein Parameter k mit dem Wert 7 verwendet. Es werden also diejenigen 7 Paare aus historischen Reisen und zugehörigen Zwischenzieleigenschaften zur Klassifizierung des nächsten Zwischenziels verwendet, die die größte Ähnlichkeit zu den Zwischenzieleigenschaften des nächsten Zwischenziels haben. In alternativen Ausführungsformen liegt der Parameter k zwischen 5 und 11, bevorzugt zwischen 3 und 13. Bevorzugt ist der Paramater k eine ungerade Zahl, so dass immer eine Mehrheitsentscheidung möglich ist. Es ist denkbar, dass der Parameter k in Abhängigkeit von der Größe der historischen Reisedaten gewählt wird. Beispielsweise kann der Parameter k umso größer gewählt werden, je größer die Anzahl der historischen Reisedaten ist. Das Ermitteln der erwarteten Reise wird auf dem Smartphone 16 durchgeführt.

In weiteren Ausführungsvariante wird der Parameter k adaptiv gewählt. Als Minimalwert hat der Parameter k den Wert 5. Je mehr historische Reisen mit einem Zwischenziel es gibt, das dem nächsten Zwischenziel ähnlich ist, umso größer wird der Parameter k gewählt. Als Maximalwert hat der Parameter k den Wert 11. In einer bevorzugten Ausführungsvariante wird die Ähnlichkeit der historischen Reisen zum nächsten Zwischenziel ermittelt, indem mit der Zwischenzielmetrik der Abstand des nächsten Zwischenziels mit dem Zwischenziel der historischen Reise, das dem nächsten Zwischenziel entspricht, ermittelt wird. Je größer die Zahl der historischen Reisen, deren Abstand einen vorgegebenen Maximalabstand zum nächsten Zwischenziel unterschreiten, umso größer wird der Parameter k gewählt.

In einem Schritt 22 werden ein erwarteter Zielort und eine erwartete Ankunftszeit 24 ermittelt. Der erwartete Zielort wird im Ausführungsbeispiel als der Zielort der erwarteten Reise bestimmt. Die erwartete Ankunftszeit 24 wird in Abhängigkeit von der erwarteten Reise ermittelt. Im Ausführungsbeispiel wird die Ankunftszeit 24 in Abhängigkeit von der Uhrzeit ermittelt, welche als Zwischenzieleigenschaft in der historischen Reise gespeichert ist, die als erwartete Reise ausgewählt wurde. Es wird eine Restreisedauer als die zeitliche Differenz zwischen der Uhrzeit der Ankunft am dem Zwischenziel, das dem nächsten Zwischenziel entspricht und der Uhrzeit der Ankunft am Zielort ermittelt. Die erwartete Ankunftszeit 24 wird ermittelt, indem die Restreisedauer auf die erwartete Ankunftszeit am nächsten Zwischenziel addiert wird.

In einem weiteren Schritt 26 wird das Zeitprogramm 12 des Heizsystems 14 eingestellt. Dazu wird zunächst überprüft, ob der erwartete Zielort der erwarteten Reise einem Wohnort 46 entspricht, an dem das Heizsystem 14 installiert ist. Das Zeitprogramm 12 des Heizsystems 14 wird im Ausführungsbeispiel eingestellt bzw. aktualisiert, wenn sich der erwartete Zielort dem Wohnort 46 entspricht. Insbesondere kann ein neuer Zeitpunkt zum Einschalten einer Heizung eines Raums eingestellt werden.

Figur 2a zeigt das Zeitprogramm 12 des Heizsystems 14. Eine Abszissenachse 28 zeigt eine Uhrzeit an. Eine Ordinatenachse 30 zeigt eine vorgesehene Raumtemperatur 32 an. Ab einer vorgesehenen Abfahrtszeit 34 befinden sich voraussichtlich keine Bewohner im Raum. Im Ausführungsbeispiel regelt das Heizsystem 14 die Raumtemperatur 32 vor der vorgesehenen Abfahrtszeit 34 auf einen vorgegebenen ersten Temperaturwert. Das Heizsystem 14 regelt die Raumtemperatur 32 ab der vorgesehenen Abfahrtszeit 34 auf einen vorgegebenen zweiten Temperaturwert, welche niedriger ist als der vorgegebene erste Temperaturwert. Ab einer vorgesehenen Ankunftszeit 36 wird voraussichtlich wenigstens ein Bewohner in den Raum zurückkehren. Das Heizsystem 14 wird die Heizung des Raums zu einer Heizzeit 38 einschalten, so dass der Raum zur vorhergesehenen Ankunftszeit 36 die gewünschte Raumtemperatur hat. Im Ausführungsbeispiel wird die gewünschte Raumtemperatur auf den ersten Temperaturwert geregelt. Die Heizzeit 38 wird ermittelt, indem eine Aufheizdauer von der vorgesehen Ankunftszeit 36 abgezogen wird. Die Aufheizdauer ist ein empirisch ermittelter Wert, der in einer Steuereinheit des Heizsystems 14 gespeichert ist.

Das Zeitprogramm 12 ist im Datenspeicher des Smartphones 18 hinterlegt. Es wird regelmäßig vom Heizsystem 14 an das Smartphone 18 übermittelt. Wird eine erwartete Ankunftszeit 24 ermittelt, die hinreichend stark von der im Zeitprogramm 12 eingestellten vorgesehenen Ankunftszeit 36 abweicht, wird das Zeitprogramm 12 geändert, indem die Heizzeit 38 verändert wird. Die neue Heizzeit 38 wird ermittelt, indem von der ermittelten Ankunftszeit 24 die Aufheizdauer abgezogen wird. Im neu ermittelten Zeitprogramm 12 wird die vorgesehene Ankunftszeit 36 auf den Wert der ermittelten Ankunftszeit 24 eingestellt.

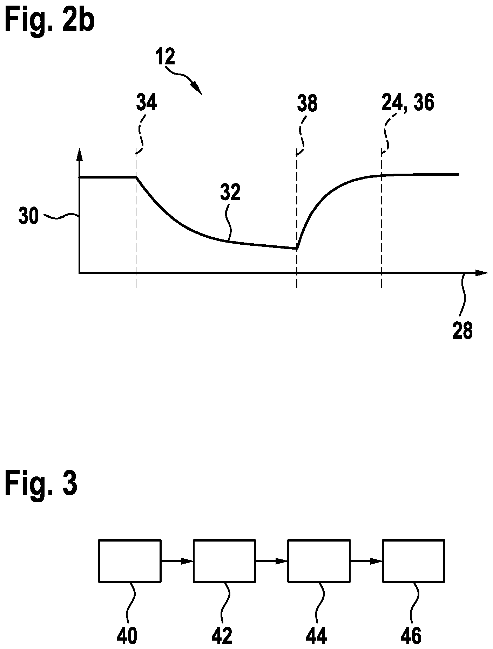

Figur 2b zeigt ein neu ermitteltes Zeitprogramm 12. Das neu ermittelte Zeitprogramm 12 wird vom Smartphone 18 an das Heizsystem 14 übermittelt. Das Heizsystem 14 regelt die Raumtemperatur dann in Abhängigkeit vom neu ermittelten Zeitprogramm 12. Liegt insbesondere die neu ermittelte Heizzeit 38 in der Vergangenheit, beginnt das Heizsystem 14 weitgehend sofort mit dem Aufheizen des Raums.

Wird die Reise beendet, wird sie im Ausführungsbeispiel zusammen mit den Zwischenzieleigenschaften ihrer Zwischenziele als historische Reise in den historischen Reisedaten gespeichert.

Die Reise ist beendet, sobald ein Zielort erreicht wurde. Im Ausführungsbeispiel wird eine aktuelle Standortzelle überprüft. Die aktuelle Standortzelle ist die Zelle des geodätischen Netzes, in der sich der aktuelle Standort befindet. Ein Zielort ist erreicht, falls sich ein vorgegebener Zielort einer im Smartphone 18 gespeicherten Liste von Zielorten in der Standortzelle befindet und eine Verweilzeit, in der sich der aktuelle Standort ununterbrochen innerhalb der gleichen Standortzelle befindet, über 5 Minuten beträgt. Im Ausführungsbeispiel sind die Zielorte zusammen mit ihrer GPS-Koordinate auf dem Smartphone 18 gespeichert.

Ein Zwischenziel ist erreicht, falls sich ein vorgegebenes Zwischenziel einer im Smartphone 18 gespeicherten Liste von Zwischenzielen in der Standortzelle befindet und die Verweilzeit in der Standortzelle über 5 Minuten beträgt.

Eine Standortzelle wird als neues Zwischenziel in der im Smartphone 18 gespeicherten Liste von Zwischenzielen gespeichert, wenn die Verweilzeit in der Standortzelle über 20 Minuten beträgt. Eine Standortzelle wird als neues Zwischenziel in der im Smartphone 18 gespeicherten Liste von Zwischenzielen gespeichert, wenn die Verweilzeit in der Standortzelle über 5 Minuten beträgt und die innerhalb der Standortzelle erfasste mittlere Geschwindigkeit kleiner als 3 Meter pro Sekunde ist.

Eine Standortzelle wird als neuer Zielort in der im Smartphone 18 gespeicherten Liste von Zielorten gespeichert, wenn die Verweilzeit in der Standortzelle über 6 Stunden beträgt.

In Varianten sind auch andere Grenzwerte für die Verweilzeit und/oder für die mittlere Geschwindigkeit zur Klassifizierung der Standortzelle als Zwischenziel oder als Zielort denkbar. Insbesondere hängen die Grenzwerte für die Verweilzeit und/oder für die mittlere Geschwindigkeit von den technischen Bedingungen und anderen Parametern des Verfahrens ab, beispielsweise von der Größe der Zellen des geodätischen Netzes. In alternativen Ausführungsformen kann die Art und/oder Anzahl von Kriterien zur Überprüfung, ob die Standortzelle ein Zwischenziel oder ein Zielort ist bzw. beinhaltet, beliebig verändert werden.

In besonderen Varianten ist ein Zielort ein Zwischenziel, welches als Zielort klassifiziert wird bzw. auf dem Smartphone 18 gespeichert wird. Es ist denkbar, dass ein Zwischenziel durch eine Benutzereingabe als Zielort gespeichert wird. Beispielsweise kann, sobald ein neues Zwischenziel erkannt wurde, eine Benutzerabfrage durchgeführt werden, ob das neue Zwischenziel ein Zielort ist. Es ist auch möglich, dass das neue Zwischenziel durch eine Heuristik automatisch als Zielort erkannt wird. Beispielsweise kann ein Zielort "Wohnung" erkannt werden als der Ort, an dem der Benutzer die meiste Zeit zwischen 22 Uhr und 6 Uhr verbringt. Ein Zielort "Arbeitsplatz" kann als der Ort erkannt werden, an dem der Benutzer tagsüber die meiste Zeit außerhalb der Wohnung verbringt.

Es ist möglich, dass ein Kriterium zur Überprüfung, ob die Standortzelle ein Zwischenziel oder ein Zielort ist, von weiteren Informationen abhängt, beispielsweise von einer Verkehrsinformation für die Standortzelle oder von einem Kalendereintrag. Auf diese Weise kann beispielsweise ein Verkehrsstau berücksichtigt werden, der sonst zu einer falschen Ermittlung des Zwischenziels oder des Zielorts führen würde. Es ist denkbar, dass in Standortzellen, die einem Zwischenziel oder Zielort eines Termins in einem Kalender entsprechen, ein Kriterium zum Klassifizieren der Standortzelle als Zwischenziel oder Zielort verändert wird, insbesondere kann das Kriterium vereinfacht werden. Es ist auch denkbar, dass in Standortzellen, die nicht einem Zwischenziel oder Zielort eines Termins in einem Kalender entsprechen, das Kriterium zum Klassifizieren eines Zwischenziels oder Zielorts erschwert wird.

In bevorzugten Varianten ist alleine der Wohnort 46 bzw. der Ort, an dem sich das Heizsystem 14 befindet, der Zielort. Das hat den Vorteil, dass alle historischen Reisen den Wohnort 46 als Zielort haben.

Figur 3 illustriert ein mögliches Szenario beim Einsatz des Verfahrens 10. Figur 3 zeigt eine durch das Verfahren 10 ermittelte erwartete Reise. In einem Schritt 16 wird ermittelt, dass sich der Benutzer auf einem ersten Weg 40 zu einem Sportstudio 42 befindet. Das Sportstudio 42 ist das nächste Zwischenziel. Dabei wird ermittelt, dass der erste Weg 40 noch voraussichtlich 7 Minuten dauern wird und anschließend das Sportstudio 42 erreicht wird.

In Schritt 20 wird die erwartete Reise ermittelt. Die erwartete Reise beschreibt, dass sich einem 72 minütigen Aufenthalt im Sportstudio 42 ein zweiter Weg 44 zum Wohnort 46 anschließt. Der Wohnort 46 ist der Zielort. Der zweite Weg 44 wird voraussichtlich 4 Minuten dauern. Der Benutzer wird also in 83 Minuten am Wohnort 46 ankommen.

In Schritt 22 wird die Ankunftszeit 24 als die aktuelle Uhrzeit plus 83 Minuten ermittelt. Falls notwendig, wird in Schritt 26 das Zeitprogramm 12 des Heizsystems 14 eingestellt werden.

Das in Figur 3 illustrierte Beispiel verdeutlicht einen Vorteil des Verfahrens 10 gegenüber einem Verfahren, welches nur das nächste Zwischenziel bzw. den nächsten Zielort voraussagt. Ein solches Verfahren würde den Wohnort 46 als nächstes Ziel erst vorhersagen, sobald der Benutzer den zweiten Weg 44 beginnt. Das Zeitprogramm könnte also höchstens um 4 Minuten korrigiert werden. Unter Umständen kann das zu wenig sein, beispielsweise wenn der Benutzer deutlich früher als zur vorgesehenen Ankunftszeit zurückkehrt und die nötige Aufheizdauer zum Erreichen der gewünschten Raumtemperatur größer ist als 4 Minuten. In diesem Fall bietet das das Verfahren 10 gemäß der vorliegenden Erfindung eine deutlich weiter in die Zukunft reichende Vorhersage. Das ermöglicht ein rechtzeitiges Einstellen des Zeitprogramms 12.

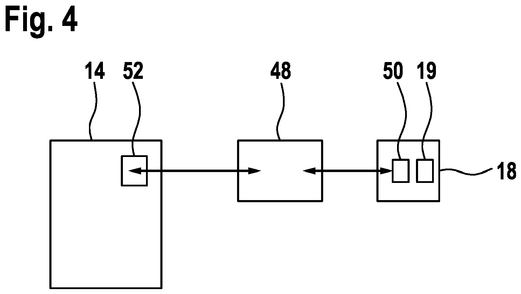

Figur 4 zeigt das Heizsystem 14 und das Smartphone 18. Das Smartphone 18 ist ein mobiles Rechengerät. Das Smartphone 18 weist das GPS-Modul 19 auf, welches zum Ermitteln der Standortkoordinate eingerichtet ist. Das Heizsystem 14 und das Smartphone 18 sind zur Kommunikation über einen Server 48 eingerichtet. Insbesondere kann das Heizsystem 14 das aktuell verwendete Zeitprogramm 12 an das Smartphone 18 senden. Das Smartphone 18 kann ein neues, insbesondere aktualisiertes Zeitprogramm 12 an das Heizsystem 14 senden, welches das Heizsystem 14 dann zur weiteren Steuerung bzw. Regelung übernimmt.

Das Smartphone 18 weist ein Mobilfunkmodem 50 auf, welches zum Herstellen einer Internetverbindung mit dem Server 48 eingerichtet ist. Das Heizsystem 14 hat ein WLAN-Modul 52, welches so eingerichtet ist, dass das Heizsystem 14 über ein Heimnetzwerk am Wohnort mit dem Server 48 über das Internet verbindbar ist.

## Patentansprüche

1. Verfahren (10) zum Einstellen eines Zeitprogramms (12) eines Heizsystems (14) und/oder eines Zeitprogramms (12) eines Systems zur Hausautomation - beispielsweise eines Smart Home Systems - durch eine Vorhersage einer erwarteten Ankunftszeit (24) und eines erwarteten Zielorts in Abhängigkeit von einem nächsten Zwischenziel, insbesondere mittels eines mobilen Rechengeräts, und wobei eine erwartete Reise ermittelt wird, wobei die erwartete Reise eine Vorhersage der erwarteten Ankunftszeit (24) und des erwarten Zielorts sowie das nächste Zwischenziel umfasst, und wobei das nächste Zwischenziel ein Aufenthalt mit einer vorgegebenen Mindestverweildauer am nächsten Zwischenziel ist, umfassend die Schritte
• Ermitteln der erwarteten Reise in Abhängigkeit von dem nächsten Zwischenziel und von historischen Reisedaten, wobei die historischen Reisedaten durch früher abgespeicherte historische Reisen gebildet werden.
• Einstellen des Zeitprogramms (12) in Abhängigkeit von der erwarteten Reise, insbesondere in Abhängigkeit von der erwarteten Ankunftszeit (24) und dem erwarteten Zielort,
wobei die erwartete Reise in Abhängigkeit von wenigstens einer Zwischenzieleigenschaft des nächsten Zwischenziels ermittelt wird, wobei die Zwischenzieleigenschaft beispielsweise eine Zeit, insbesondere eine aktuelle Zeit oder eine erwartete Ankunftszeit am nächsten Zwischenziel, und/oder eine Wetterinformation sein kann,
und wobei beim Ermitteln der erwarteten Reise als erwartete Reise die historische Reise ausgewählt wird, bei der die wenigstens eine Zwischenzieleigenschaft des Zwischenziels der historischen Reise, das dem nächsten Zwischenziel entspricht, eine größtmögliche Ähnlichkeit zu der wenigstens einen Zwischenzieleigenschaft des nächsten Zwischenziels aufweist, wobei die größtmögliche Ähnlichkeit von der wenigstens einen Zwischenzieleigenschaft des nächsten Zwischenziels zu der wenigstens einen Zwischenzieleigenschaften des Zwischenziels der historischen Reise, das dem nächsten Zwischenziel entspricht, mit einer Metrik bzw. Abstandsfunktion der wenigstens einen Zwischenzieleigenschaft definiert bzw. ermittelt wird.

2. Verfahren (10) nach Anspruch 1, **dadurch gekennzeichnet, dass** das nächste Zwischenziel aus einer bisher zurückgelegten Teilroute ermittelt wird.

3. Verfahren (10) nach einem der vorhergehenden Ansprüche, wobei die Zwischenzieleigenschaften eine Uhrzeit und ein Wochentag umfassen.

4. Verfahren (10) nach einem der vorhergehenden Ansprüche, **dadurch gekennzeichnet, dass** die historischen Reisen zusammen mit wenigstens einer Zwischenzieleigenschaft von wenigstens einem Zwischenziel der historischen Reise in den historischen Reisedaten gespeichert sind.

5. Verfahren (10) nach einem der vorhergehenden Ansprüche, **dadurch gekennzeichnet, dass** eine Reise, insbesondere die historische Reise oder die erwartete Reise, aus Routen zusammengesetzt ist, wobei eine Route einen Startort mit einem Zwischenziel verbindet oder eine Route ein Zwischenziel mit einem nachfolgenden Zwischenziel oder dem Zielort verbindet.

6. Verfahren (10) nach einem der vorhergehenden Ansprüche, **dadurch gekennzeichnet, dass** die erwartete Reise durch einen k-Nearest-Neighbor-Algorithmus aus den historischen Reisedaten ausgewählt wird und eine Zwischenzielmetrik die wenigstens eine Zwischenzieleigenschaft des nächsten Zwischenziels mit der wenigstens einen Zwischenzieleigenschaft des Zwischenziels der historischen Reise vergleicht, das dem nächsten Zwischenziel entspricht.

7. Verfahren (10) nach einem der vorhergehenden Ansprüche, **dadurch gekennzeichnet, dass** die historischen Reisedaten nach einer Zielerreichung in Abhängigkeit von der beendeten Reise aktualisiert werden, insbesondere dass die beendete Reise - bevorzugt zusammen mit der wenigstens einen Zwischenzieleigenschaft - in den historische Reisedaten abgespeichert wird.

8. Computerprogramm, welches dazu eingerichtet ist, alle Schritte eines Verfahrens (10) nach einem der vorhergehenden Ansprüche auszuführen.

9. Maschinenlesbares Speichermedium, auf dem das Computerprogramm nach Anspruch 8 gespeichert ist.

10. Mobiles Rechengerät, insbesondere Smartphone (18), mit einem Sender zum Senden von Daten an ein Heizsystem (14) und/oder an ein System zur Hausautomation - beispielsweise ein Mobilfunkmoden (50), wobei das mobile Rechengerät durch eine entsprechende integrierte Schaltung und/oder ein auf einem Speicher gespeichertes Computerprogramm nach Anspruch 8 dazu eingerichtet ist, ein Verfahren nach einem der Ansprüche 1 bis 7 auszuführen.

## Claims

1. Method (10) for adjusting a timing programme (12) for a heating system (14) and/or a timing programme (12) for a system for home automation - for example a smart home system - by predicting an expected time of arrival (24) and an expected destination on the basis of a nearest intermediate destination, in particular by means of a mobile computing device, and wherein an expected journey is ascertained, wherein the expected journey comprises a prediction of the expected time of arrival (24) and of the expected destination and also the nearest intermediate destination, and wherein the nearest intermediate destination is a stop with a predefined minimum length of stay at the nearest intermediate destination, comprising the steps of
· ascertaining the expected journey on the basis of the nearest intermediate destination and historical journey data, wherein the historical journey data are formed by previously stored historical journeys,
· adjusting the timing programme (12) on the basis of the expected journey, in particular on the basis of the expected time of arrival (24) and the expected destination,
wherein the expected journey is ascertained on the basis of at least one intermediate destination property of the nearest intermediate destination, wherein the intermediate destination property may be for example a time, in particular a current time or an expected time of arrival at the nearest intermediate destination, and/or weather information,
and wherein the ascertaining of the expected journey involves the expected journey selected being the historical journey for which the at least one intermediate destination property of the intermediate destination of the historical journey that corresponds to the nearest intermediate destination has a greatest possible degree of similarity with the at least one intermediate destination property of the nearest intermediate destination, wherein the greatest possible degree of similarity of the at least one intermediate destination property of the nearest intermediate destination with the at least one intermediate destination property of the intermediate destination of the historical journey that corresponds to the nearest intermediate destination is defined or ascertained by means of a metric or distance function of the at least one intermediate destination property.

2. Method (10) according to Claim 1, **characterized in that** the nearest intermediate destination is ascertained from a previously covered partial route.

3. Method (10) according to either of the preceding claims, wherein the intermediate destination properties comprise a time of day and a day of the week.

4. Method (10) according to one of the preceding claims, **characterized in that** the historical journeys together with at least one intermediate destination property of at least one intermediate destination of the historical journey are stored in the historical journey data.

5. Method (10) according to one of the preceding claims, **characterized in that** a journey, in particular the historical journey or the expected journey, is made up of routes, wherein a route connects a starting location to an intermediate destination or a route connects an intermediate destination to a subsequent intermediate destination or to the destination.

6. Method (10) according to one of the preceding claims, **characterized in that** the expected journey is selected from the historical journey data by a k nearest neighbours algorithm, and an intermediate destination metric compares the at least one intermediate destination property of the nearest intermediate destination with the at least one intermediate destination property of the intermediate destination of the historical journey that corresponds to the nearest intermediate destination.

7. Method (10) according to one of the preceding claims, **characterized in that** the historical journey data are updated on the basis of the completed journey after the destination is reached, in particular **in that** the completed journey - preferably together with the at least one intermediate destination property - is stored in the historical journey data.

8. Computer program configured to carry out all of the steps of a method (10) according to one of the preceding claims.

9. Machine-readable storage medium on which the computer program according to Claim 8 is stored.

10. Mobile computing device, in particular smartphone (18), having a transmitter for transmitting data to a heating system (14) and/or to a system for home automation - for example a mobile radio modem (50), wherein the mobile computing device is configured by an appropriate integrated circuit and/or a computer program according to Claim 8 stored on a memory to carry out a method according to one of Claims 1 to 7.

## Revendications

1. Procédé (10) de réglage d'un programme de temporisation (12) d'un système de chauffage (14) et/ou d'un programme de temporisation (12) d'un système domotique - par exemple d'un système de maison intelligente - par prédiction d'une heure d'arrivée prévue (24) et d'une destination prévue en fonction d'une prochaine destination intermédiaire, en particulier au moyen d'un appareil informatique mobile, et dans lequel un voyage prévu est déterminé, dans lequel le voyage prévu comprend une prédiction de l'heure d'arrivée prévue (24) et de la destination prévue et de la prochaine destination intermédiaire, et dans lequel la prochaine destination intermédiaire est un séjour d'une durée minimale prédéterminée à la prochaine destination intermédiaire, comprenant les étapes consistant à
• déterminer le voyage prévu en fonction de la prochaine destination intermédiaire et de données de voyage historiques, dans lequel les données de voyage historiques sont constituées par des voyages historiques préalablement sauvegardés,
• régler le programme de temporisation (12) en fonction du voyage prévu, en particulier en fonction de l'heure d'arrivée prévue (24) et de la destination prévue,
dans lequel le voyage prévu est déterminé en fonction d'au moins une propriété de la destination intermédiaire suivante, dans lequel la propriété de destination intermédiaire peut par exemple être une heure, en particulier une heure actuelle ou une heure d'arrivée prévue à la destination intermédiaire suivante, et/ou des informations météorologiques,
et dans lequel, lors de la détermination du voyage prévu, le voyage historique est sélectionné en tant que voyage prévu, au cours duquel ladite au moins une propriété de destination intermédiaire de la destination intermédiaire du voyage historique qui correspondant à la destination intermédiaire suivante présente la plus grande ressemblance possible avec ladite au moins une propriété de destination intermédiaire de la destination intermédiaire suivante,
dans lequel la plus grande ressemblance possible entre ladite au moins une propriété de destination intermédiaire de la destination intermédiaire suivante et ladite au moins une propriété de destination intermédiaire de la destination intermédiaire du voyage historique qui correspond à la destination intermédiaire suivante est définie ou déterminée à l'aide d'une fonction de métrique ou de distance de ladite au moins une propriété de destination intermédiaire.

2. Procédé (10) selon la revendication 1, **caractérisé en ce que** la destination intermédiaire suivante est déterminée à partir d'un itinéraire partiel parcouru jusqu'à présent.

3. Procédé (10) selon l'une des revendications précédentes, dans lequel les propriétés de destination intermédiaire comprennent une heure et un jour de la semaine.

4. Procédé (10) selon l'une des revendications précédentes, **caractérisé en ce que** les voyages historiques sont stockés dans les données de voyage historiques en association avec au moins une propriété de destination intermédiaire d'au moins une de destination intermédiaire du voyage historique.

5. Procédé (10) selon l'une des revendications précédentes, **caractérisé en ce qu'**un voyage, en particulier le voyage historique ou le voyage prévu, est composé d'itinéraires, dans lequel un itinéraire relie un point de départ à une destination intermédiaire ou un itinéraire relie une destination intermédiaire à une destination intermédiaire ultérieure ou à la destination.

6. Procédé (10) selon l'une des revendications précédentes, **caractérisé en ce que** le voyage prévu est sélectionné parmi les données de voyage historiques par un algorithme des k voisins les plus proches et une métrique de destination intermédiaire compare ladite au moins une propriété de destination intermédiaire de la destination intermédiaire suivante à ladite au moins une propriété de destination intermédiaire de la destination intermédiaire du voyage historique correspondant à la destination intermédiaire suivante.

7. Procédé (10) selon l'une des revendications précédentes, **caractérisé en ce que** les données de voyage historiques sont mises à jour après qu'une destination a été atteinte en fonction du voyage accompli, en particulier **en ce que** le voyage accompli - de préférence en association avec au moins une propriété de destination intermédiaire - est stocké dans les données de voyage historiques.

8. Programme informatique qui est conçu pour exécuter toutes les étapes d'un procédé (10) selon l'une des revendications précédentes.

9. Support de stockage lisible par machine sur lequel est stocké le programme informatique selon la revendication 8.

10. Appareil informatique mobile, en particulier un smartphone (18), comportant un émetteur permettant d'envoyer des données à un système de chauffage (14) et/ou à un système domotique - par exemple un mode radio mobile (50), dans lequel l'appareil informatique mobile est conçu pour la mise en œuvre d'un procédé selon l'une des revendications 1 à 7 par un circuit intégré correspondant et/ou un programme informatique selon la revendication 8 stocké dans une mémoire.
